# EUROPEAN PATENT APPLICATION

(11) **EP 3 444 683 A1**
(43) Date of publication of application: **20.02.2019**
(21) Application number: 18184634.6
(22) Date of filing: 20.07.2018
(51) Int. Cl.: G05B 19/042, B23Q 1/25, G05B 19/416

(54) **POSITIONING SYSTEM, METHOD, AND STAGE SERIAL INTERFACE BOARD**

(30) Priority: 16.08.2017 US 201715678770
(71) Applicant: AEROTECH, INC., Pittsburgh, PA 15238 (US)
(72) Inventor: NOVOTNAK, Robert T., North Huntingdon, PA 15642 (US); WEIBEL IV, Alexander R., Coraopolis, PA 15108 (US)
(74) Representative: Barton, Matthew Thomas

(57) **Abstract**

Disclosed is a positioning system having at least one axis of movement and a serial interface board and method for use therewith. The system includes at least one controller and at least one positioning stage. The at least one positioning stage is in communication with the at least one controller and includes a first positioning stage. The first positioning stage includes a first carriage and a first motor configured to displace the first carriage along a first positioning axis or rotate the first carriage about the first positioning axis. The first positioning stage also includes a first serial interface that is configured to connect to a source of power and receive first-stage sensor signals from one or more stage sensors associated with the first positioning stage. The first serial interface is also configured to communicate at least a portion of the first-stage sensor signals to the at least one controller.

## Description

### BACKGROUND OF THE INVENTION

### Field of the Invention

Disclosed embodiments relate generally to positioning systems, and in particular, to a positioning system having one or more positioning stages and a serial interface board for use in or on one or more positioning stages thereof.

### Description of Related Art

Positioning systems are used to secure and move a target object through space, and are often made up of one or more positioning stages that are configured to move a carriage along one or more axes. Positioning systems having more than one positioning stage can achieve more precise and elaborate movements by effectively combining the multiple axes of movement of the positioning stages. One example of a multi-stage positioning stage is described in U.S. Patent No. 7,084,533, which is herein incorporated by reference in its entirety. Positioning stages often communicate with a controller that is programmed or configured to precisely manipulate the carriages of the stages, and by extension, manipulate the target object along one or more axes. Positioning stages are equipped with sensors to provide feedback to the controller and to facilitate a means of controlling precise movements. Low level signals are communicated between a positioning stage and the controller via a bundle of parallel, physical wires or cables. There are some drawbacks to these implementations of parallel wired communication. For one, the cables are unreliable, may generate particulates, and increase the cost of the system. Moreover, these negative effects are magnified as additional positioning stages are combined together, which introduces additional parallel bundles of cable running through the positioning system and out to the controller.

There is a need in the art to reduce the drawbacks and number of physical cables in positioning systems without compromising the connectivity between the controller and the positioning stages.

### SUMMARY OF THE INVENTION

Generally, provided is a positioning system having at least one axis of movement, a serial interface board for use therewith, and a method of operating said system. In one example, the positioning system includes a controller and a positioning stage. The positioning stage may be in communication with the controller. The positioning stage may include a carriage and a motor configured to displace the carriage along a positioning axis or rotate the carriage about the positioning axis. The positioning stage may also include a serial interface. The serial interface may include an integrated circuit, a stage sensor connection, and a data connection. The serial interface may be configured to connect to a source of power, receive sensor signals from one or more stage sensors associated with the positioning stage, and communicate at least a portion of the sensor signals to the controller.

According to one example, provided is a positioning system having at least one axis of movement. The positioning system includes at least one controller configured to communicate stage-positioning control signals. The positioning system also includes at least one positioning stage in communication with the at least one controller and including a first positioning stage. The first positioning stage is configured to receive the stage-positioning control signals from the at least one controller and includes a first carriage. The first positioning stage also includes a first motor configured to displace the first carriage along a first positioning axis or rotate the first carriage about the first positioning axis. The first positioning stage further includes a first serial interface including an integrated circuit, at least one stage sensor connection, and a first data connection. The first serial interface is configured to connect to a source of power and receive first-stage sensor signals from one or more stage sensors associated with the first positioning stage. The first serial interface is also configured to communicate at least a portion of the first-stage sensor signals to the at least one controller via the first data connection.

In a further example, the at least one positioning stage may include a second positioning stage carried at least partly by the first carriage. The second positioning stage may include a second carriage and a second motor configured to displace the second carriage along a second positioning axis or rotate the second carriage about the second positioning axis. The second positioning stage may also include a second serial interface including an integrated circuit, at least one stage sensor connection, and a second data connection. The second serial interface may be configured to connect to a source of power and receive second-stage sensor signals from one or more stage sensors associated with the second positioning stage. The second serial interface may also be configured to communicate at least a portion of the second-stage sensor signals to the at least one controller via the second data connection.

In a further example, the at least one positioning stage may include a third positioning stage carried at least partly by the second carriage. The third positioning stage may include a third carriage and a third motor configured to displace the third carriage along a third positioning axis or rotate the third carriage about the third positioning axis. The third positioning stage may include a third serial interface including an integrated circuit, at least one stage sensor connection, and a third data connection. The third serial interface may be configured to connect to a source of power and receive third-stage sensor signals from one or more stage sensors associated with the third positioning stage. The third serial interface may also be configured to communicate at least a portion of the third-stage sensor signals to the at least one controller via the third data connection.

In a further example, the at least one positioning stage may include a fourth positioning stage carried at least partly by the third carriage. The fourth positioning stage may include a fourth carriage and a fourth motor configured to displace the fourth carriage along a fourth positioning axis or rotate the fourth carriage about the fourth positioning axis. The fourth positioning stage may also include a fourth serial interface including an integrated circuit, at least one stage sensor connection, and a fourth data connection. The fourth serial interface may be configured to connect to a source of power and receive fourth-stage sensor signals from one or more stage sensors associated with the fourth positioning stage. The fourth serial interface may also be configured to communicate at least a portion of the fourth-stage sensor signals to the at least one controller via the fourth data connection.

In a further example, the first-stage sensor signals, the second-stage sensor signals, the third-stage sensor signals, and the fourth-stage sensor signals each may include at least one of the following signals: a motor temperature, an acceleration force, a stage material temperature, a stage position, or any combination thereof. The one or more stage sensors of the first positioning stage, the second positioning stage, the third positioning stage, or the fourth positioning stage may include at least one of the following: a hall sensor; a limit sensor; an accelerometer; an inclinometer; a geophone; an analog encoder; a digital encoder; or any combination thereof.

In a further example, the second data connection of the second serial interface may be communicatively connected to the first serial interface, such that the second-stage sensor signals are communicated to the at least one controller via the first serial interface. The third data connection of the third serial interface may be communicatively connected to the second serial interface or the first serial interface, such that the third-stage sensor signals are communicated to the at least one controller via the second serial interface and/or the first serial interface. The fourth data connection of the fourth serial interface may be communicatively connected to one of the third serial interface, the second serial interface, and the first serial interface, such that the fourth-stage sensor signals are communicated to the at least one controller via at least one of the third serial interface, the second serial interface, and the first serial interface. For each serial interface of the first serial interface, the second serial interface, the third serial interface, and the fourth serial interface, the integrated circuit may include a field programmable gate array.

According to one example, provided is a serial interface board for use in or on one or more positioning stages of a positioning system controlled by at least one controller. The serial interface board includes a connection to a source of power and at least one data connection interface configured to be communicatively connected with other serial interface boards or the at least one controller. The serial interface board also includes at least one stage sensor connection interface configured to receive stage sensor signals from one or more positioning stage sensors. The serial interface board further includes an integrated circuit communicatively connected to the at least one data connection interface and the at least one stage sensor connection interface. The integrated circuit is programmed or configured to receive stage sensor signals from the one or more positioning stage sensors and communicate the stage sensor signals to the at least one controller.

In a further example, the integrated circuit may be programmed or configured to relay stage sensor signals between at least one other serial interface board and the at least one controller, wherein a first data connection interface of the at least one data connection interface is configured to communicatively connect to the at least one other serial interface board. The serial interface board may also include at least one analog-to-digital converter configured to encode analog stage sensor signals as digital stage sensor signals.

In a further example, the integrated circuit may be programmed or configured to relay signals between a first other serial interface board and a second other serial interface board. The first data connection interface of the at least one data connection interface may be configured to communicatively connect to the first other serial interface board and a second data connection interface of the at least one data connection interface may be configured to communicatively connect to the second other serial interface board. The stage sensor signals may include at least one of the following: a motor temperature; an acceleration force; a stage material temperature; a stage position; or any combination thereof.

According to one example, provided is a method of operating a positioning system having at least one axis of movement and including at least one controller configured to send control signals and receive sensor signals. The at least one positioning stage is in communication with the at least one controller and includes a first positioning stage having a first serial interface. The method includes the steps of connecting the first serial interface to a source of power and relaying stage sensor signals from one or more positioning stage sensors associated with the at least one positioning stage to the at least one controller. The method also includes communicating at least a portion of the stage sensor signals to the at least one controller.

In a further example, the at least one positioning stage may include a second positioning stage having a second serial interface and being at least partly carried by the first positioning stage. The method may further include the steps of communicatively connecting the second serial interface to the first serial interface and relaying at least a portion of stage sensor signals from the second positioning stage to the at least one controller via the first serial interface.

In a further example, the at least one positioning stage may include a third positioning stage having a third serial interface and being at least partly carried by the second positioning stage. The method may further include the steps of communicatively connecting the third serial interface to the second serial interface or the first serial interface and relaying at least a portion of stage sensor signals from the third positioning stage to the at least one controller via the second serial interface and/or the first serial interface.

In a further example, the at least one positioning stage may include a fourth positioning stage having a fourth serial interface and being at least partly carried by the third positioning stage. The method may further include the steps of communicatively connecting the fourth serial interface to one of the third serial interface, the second serial interface, and the first serial interface, and relaying at least a portion of stage sensor signals from the fourth positioning stage to the at least one controller via at least one of the third serial interface, the second serial interface, and the first serial interface.

In a further example, the first serial interface may include an integrated circuit. The method may further include converting analog stage sensor signals to digital sensor signals and communicating the digital sensor signals to the at least one controller.

Other preferred and non-limiting embodiments or aspects of the present invention will be set forth in the following numbered clauses:
Clause 1: A positioning system having at least one axis of movement comprising: at least one controller configured to communicate stage-positioning control signals; at least one positioning stage in communication with the at least one controller and comprising a first positioning stage, the first positioning stage configured to receive the stage-positioning control signals from the at least one controller and comprising: a first carriage; a first motor configured to displace the first carriage along a first positioning axis or rotate the first carriage about the first positioning axis; and a first serial interface comprising an integrated circuit, at least one stage sensor connection, and a first data connection, the first serial interface being configured to: connect to a source of power; receive first-stage sensor signals from one or more stage sensors associated with the first positioning stage; and communicate at least a portion of the first-stage sensor signals to the at least one controller via the first data connection.
Clause 2: The positioning system of clause 1, wherein the at least one positioning stage further comprises a second positioning stage carried at least partly by the first carriage, the second positioning stage comprising: a second carriage; a second motor configured to displace the second carriage along a second positioning axis or rotate the second carriage about the second positioning axis; and a second serial interface comprising an integrated circuit, at least one stage sensor connection, and a second data connection, the second serial interface being configured to: connect to a source of power; receive second-stage sensor signals from one or more stage sensors associated with the second positioning stage; and communicate at least a portion of the second-stage sensor signals to the at least one controller via the second data connection.
Clause 3: The positioning system of clauses 1 or 2, wherein the at least one positioning stage further comprises a third positioning stage carried at least partly by the second carriage, the third positioning stage comprising: a third carriage; a third motor configured to displace the third carriage along a third positioning axis or rotate the third carriage about the third positioning axis; and a third serial interface comprising an integrated circuit, at least one stage sensor connection, and a third data connection, the third serial interface being configured to: connect to a source of power; receive third-stage sensor signals from one or more stage sensors associated with the third positioning stage; and communicate at least a portion of the third-stage sensor signals to the at least one controller via the third data connection.
Clause 4: The positioning system of any of clauses 1-3, wherein the at least one positioning stage further comprises a fourth positioning stage carried at least partly by the third carriage, the fourth positioning stage comprising: a fourth carriage; a fourth motor configured to displace the fourth carriage along a fourth positioning axis or rotate the fourth carriage about the fourth positioning axis; and a fourth serial interface comprising an integrated circuit, at least one stage sensor connection, and a fourth data connection, the fourth serial interface being configured to: connect to a source of power; receive fourth-stage sensor signals from one or more stage sensors associated with the fourth positioning stage; and communicate at least a portion of the fourth-stage sensor signals to the at least one controller via the fourth data connection.
Clause 5: The positioning system of any of clauses 1-4, where the first-stage sensor signals, the second-stage sensor signals, the third-stage sensor signals, and the fourth-stage sensor signals each comprise at least one of the following signals: a motor temperature; an acceleration force; a stage material temperature; a stage position; or any combination thereof.
Clause 6: The positioning system of any of clauses 1-5, wherein the one or more stage sensors of the first positioning stage, the second positioning stage, the third positioning stage, or the fourth positioning stage comprise at least one of the following: a hall sensor; a limit sensor; an accelerometer; an inclinometer; a geophone; an analog encoder; a digital encoder; or any combination thereof.
Clause 7: The positioning system of any of clauses 1-6, wherein the second data connection of the second serial interface is communicatively connected to the first serial interface, such that the second-stage sensor signals are communicated to the at least one controller via the first serial interface.
Clause 8: The positioning system of any of clauses 1-7, wherein the third data connection of the third serial interface is communicatively connected to the second serial interface or the first serial interface, such that the third-stage sensor signals are communicated to the at least one controller via the second serial interface and/or the first serial interface.
Clause 9: The positioning system of any of clauses 1-8, wherein the fourth data connection of the fourth serial interface is communicatively connected to one of the third serial interface, the second serial interface, and the first serial interface, such that the fourth-stage sensor signals are communicated to the at least one controller via at least one of the third serial interface, the second serial interface, and the first serial interface.
Clause 10: The positioning system of any of clauses 1-9, wherein for each serial interface of the first serial interface, the second serial interface, the third serial interface, and the fourth serial interface, the integrated circuit comprises a field programmable gate array.
Clause 11: A serial interface board for use in or on one or more positioning stages of a positioning system controlled by at least one controller, the serial interface board comprising: a connection to a source of power; at least one data connection interface configured to be communicatively connected with other serial interface boards or the at least one controller; at least one stage sensor connection interface configured to receive stage sensor signals from one or more positioning stage sensors; and an integrated circuit communicatively connected to the at least one data connection interface and the at least one stage sensor connection interface, the integrated circuit programmed or configured to: receive stage sensor signals from the one or more positioning stage sensors; and communicate the stage sensor signals to the at least one controller.
Clause 12: The serial interface board of clause 11, wherein the integrated circuit is further programmed or configured to relay stage sensor signals between at least one other serial interface board and the at least one controller, wherein a first data connection interface of the at least one data connection interface is configured to communicatively connect to the at least one other serial interface board.
Clause 13: The serial interface board of clauses 11 or 12, further comprising at least one analog-to-digital converter configured to encode analog stage sensor signals as digital stage sensor signals.
Clause 14: The serial interface board of any of clauses 11-13, wherein the integrated circuit is further programmed or configured to relay signals between a first other serial interface board and a second other serial interface board, and wherein a first data connection interface of the at least one data connection interface is configured to communicatively connect to the first other serial interface board and a second data connection interface of the at least one data connection interface is configured to communicatively connect to the second other serial interface board.
Clause 15: The serial interface board of any of clauses 11-14, wherein the stage sensor signals comprise at least one of the following: a motor temperature; an acceleration force; a stage material temperature; a stage position; or any combination thereof.
Clause 16: A method of operating a positioning system having at least one axis of movement and comprising at least one controller configured to send control signals and receive sensor signals, and at least one positioning stage in communication with the at least one controller and comprising a first positioning stage having a first serial interface, the method comprising the steps of: connecting the first serial interface to a source of power; relaying stage sensor signals from one or more positioning stage sensors associated with the at least one positioning stage to the at least one controller; and communicating at least a portion of the stage sensor signals to the at least one controller.
Clause 17: The method of clause 16, wherein the at least one positioning stage further comprises a second positioning stage having a second serial interface and being at least partly carried by the first positioning stage, the method further comprising the steps of: communicatively connecting the second serial interface to the first serial interface; and relaying at least a portion of stage sensor signals from the second positioning stage to the at least one controller via the first serial interface.
Clause 18: The method of clauses 16 or 17, wherein the at least one positioning stage further comprises a third positioning stage having a third serial interface and being at least partly carried by the second positioning stage, the method further comprising the steps of: communicatively connecting the third serial interface to the second serial interface or the first serial interface; and relaying at least a portion of stage sensor signals from the third positioning stage to the at least one controller via the second serial interface and/or the first serial interface.
Clause 19: The method of any of clauses 16-18, wherein the at least one positioning stage further comprises a fourth positioning stage having a fourth serial interface and being at least partly carried by the third positioning stage, the method further comprising the steps of: communicatively connecting the fourth serial interface to one of the third serial interface, the second serial interface, and the first serial interface; and relaying at least a portion of stage sensor signals from the fourth positioning stage to the at least one controller via at least one of the third serial interface, the second serial interface, and the first serial interface.
Clause 20: The method of any of clauses 16-19, wherein the first serial interface comprises an integrated circuit, the method further comprising converting analog stage sensor signals to digital sensor signals and communicating the digital sensor signals to the at least one controller.

These and other features and characteristics of the present invention, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and the claims, the singular form of "a", "an", and "the" include plural referents unless the context clearly dictates otherwise.

### BRIEF DESCRIPTION OF THE DRAWINGS

FIG. 1 is a schematic diagram of a prior art single-axis positioning system;
FIG. 2 is a schematic diagram of a prior art multi-axis positioning system;
FIG. 3 is a schematic diagram of one embodiment or aspect of a single-axis positioning system according to the principles of the present invention;
FIG. 4 is a schematic diagram of one embodiment or aspect of a multi-axis positioning system according to the principles of the present invention;
FIG. 5 is a schematic diagram of one embodiment or aspect of a multi-axis positioning system according to the principles of the present invention;
FIG. 6 is a schematic diagram of one embodiment or aspect of a serial interface board for use in or on a positioning system according to the principles of the present invention;
FIG. 7 is a schematic diagram of one embodiment or aspect of a serial interface board for use in or on a positioning system according to the principles of the present invention.
FIG. 8 is a schematic diagram of one embodiment or aspect of a multi-axis positioning system according to the principles of the present invention;
FIG. 9 is a schematic diagram of one embodiment or aspect of a multi-axis positioning system according to the principles of the present invention;
FIG. 10 is a schematic diagram of one embodiment or aspect of a multi-axis positioning system according to the principles of the present invention; and
FIG. 11 is a schematic diagram of one embodiment or aspect of a multi-axis positioning system according to the principles of the present invention.

### DETAILED DESCRIPTION OF THE INVENTION

For purposes of the description hereinafter, the terms "upper", "lower", "right", "left", "vertical", "horizontal", "top", "bottom", "lateral", "longitudinal" and derivatives thereof shall relate to the invention as it is oriented in the drawing figures. However, it is to be understood that the invention may assume various alternative variations and step sequences, except where expressly specified to the contrary. It is also to be understood that the specific devices and process illustrated in the attached drawings, and described in the following specification, are simply exemplary embodiments of the invention. Hence, specific dimensions and other physical characteristics related to the embodiments disclosed herein are not to be considered as limiting.

As used herein, the terms "communication" and "communicate" refer to the receipt or transfer of one or more signals, messages, commands, or other type of data. For one unit (*e.g.,* any device, system, or component thereof) to be in communication with another unit means that the one unit is able to directly or indirectly receive data from and/or transmit data to the other unit. This may refer to a direct or indirect connection that is wired and/or wireless in nature. Additionally, two units may be in communication with each other even though the data transmitted may be modified, processed, relayed, and/or routed between the first and second unit. For example, a first unit may be in communication with a second unit even though the first unit passively receives data and does not actively transmit data to the second unit. As another example, a first unit may be in communication with a second unit if an intermediary unit processes data from one unit and transmits processed data to the second unit. It will be appreciated that numerous other arrangements are possible.

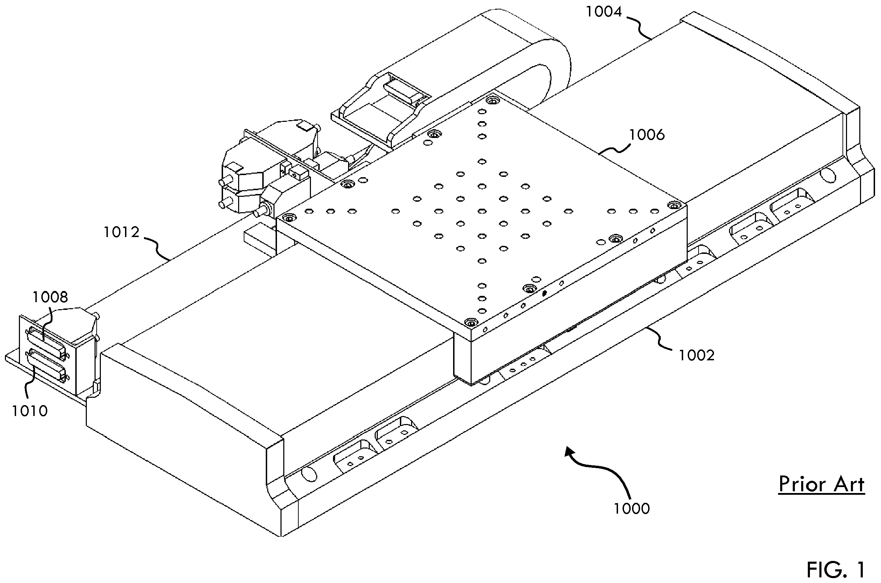

With specific reference to FIG. 1, depicted is a prior art positioning system **1000** configured for single-axis manipulation of a target object. The positioning system **1000** includes a linear translation stage **1002** for manipulating an object along a first linear axis. The linear translation stage **1002** includes a base track **1004** along which a carriage **1006** may be displaced by a motor (internal as depicted). The linear translation stage **1002** also includes a motor power connector **1008** for connection to a power source, which supplies power to drive the motor. The linear translation stage further includes a motor/encoder feedback connector **1010** for communicating control signals from a controller (*e.g.,* a processor, a field-programmable gate array, and/or the like), which control the motor, and, therefore, the movement of the carriage **1006.** The motor/encoder feedback connector **1010** further communicates sensor data from the linear translation stage **1002** to the controller, in particular, feedback regarding the position of the carriage **1006.** The linear translation stage **1002** further includes a cable tray **1012** for managing stage cables (not pictured) running from the connectors **1008, 1010** into the stage **1002.** The prior art positioning system **1000,** as depicted, has the distinct drawback of requiring communication with the controller in parallel, which means that the number of cables within the system **1000** would increase as the number of stages increase. Each additional stage of the system **1000** would require its own internal connectors, cable trays, and parallel wiring.

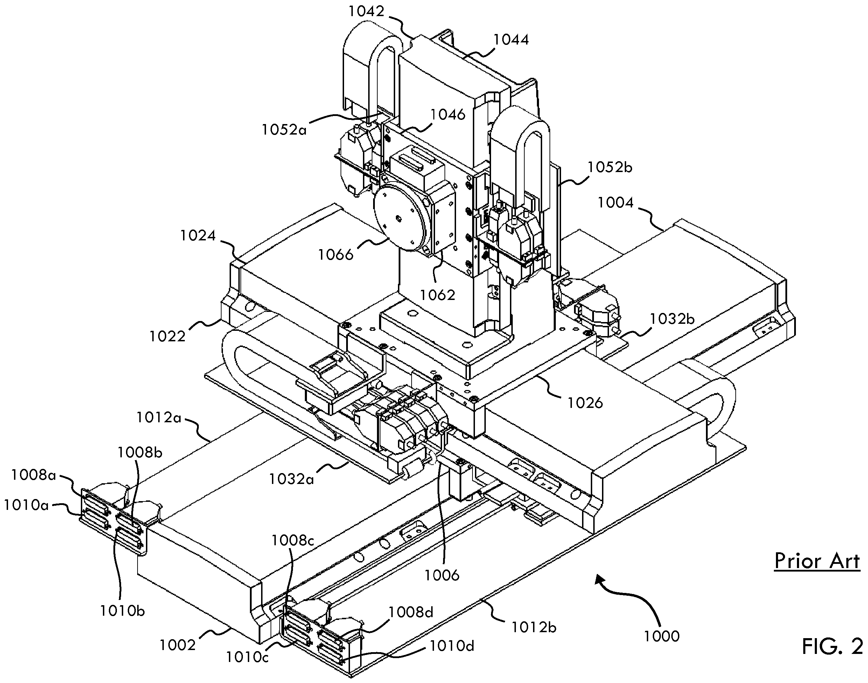

With specific reference to FIG. 2, depicted is a prior art positioning system **1000** configured for multi-axis manipulation of a target object. The positioning system **1000** includes a first positioning stage **1002,** a second positioning stage **1022,** a third positioning stage **1042,** and a fourth positioning stage **1062.** Each linear translation stage **1002, 1022, 1042** includes a base track **1004, 1024, 1044** along which a carriage **1006, 1026, 1046** may be displayed by a motor (internal as depicted). The fourth positioning stage **1062** has a carriage **1066** which ultimately may be connected to the target object for manipulation. For each stage **1002, 1022, 1042, 1062** is a motor power connector **1008a, 1008b, 1008c, 1008d** for connection to a power source, which supplies power to drive each stage motor. Also, for each stage **1002, 1022, 1042, 1062** is a motor/encoder feedback connector **1010a, 1010b, 1010c, 1010d,** which communicates control signals from a controller (*e.g.,* a processor, a field-programmable gate array, and/or the like) which controls each motor, and, therefore, the movement of each carriage **1006, 1026, 1046, 1066.** The plurality of motor/encoder feedback connectors **1010a, 1010b, 1010c, 1010d** further communicate sensor data from each stage **1002, 1022, 1042, 1062** to the controller, in particular, feedback regarding the position of each carriage **1006, 1026, 1046, 1066,** as well as hall signals, limits, and/or the like. Because of the number of cables required to connect from each connector **1008a, 1008b, 1008c, 1008d, 1010a, 1010b, 1010c, 1010d** to each stage **1002, 1022, 1042, 1062,** the system **1000** includes a series of cable trays **1012a, 1012b, 1032a, 1032b, 1052a, 1052b.** The large number of cables decrease the reliability of the system due to the increased possibility for open circuit or short circuit failures. Large cables also increase the requirement for cable management systems, which increase the overall system size, increase moving mass, and create disturbances in the servo system. In addition, the requirement of additional cables increases particulate matter that is generated due to movement of the cables against one another, which is detrimental to the use of the positioning system in a clean room environment.

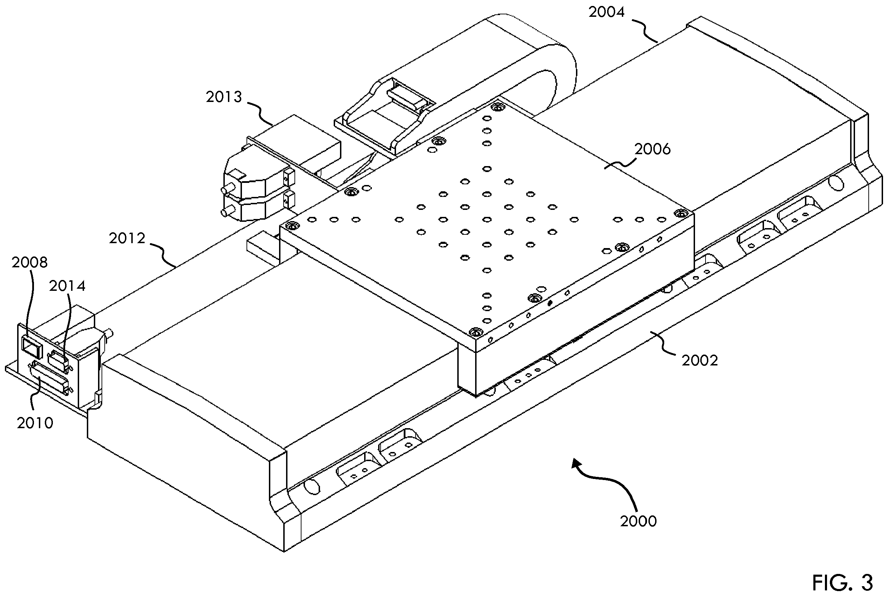

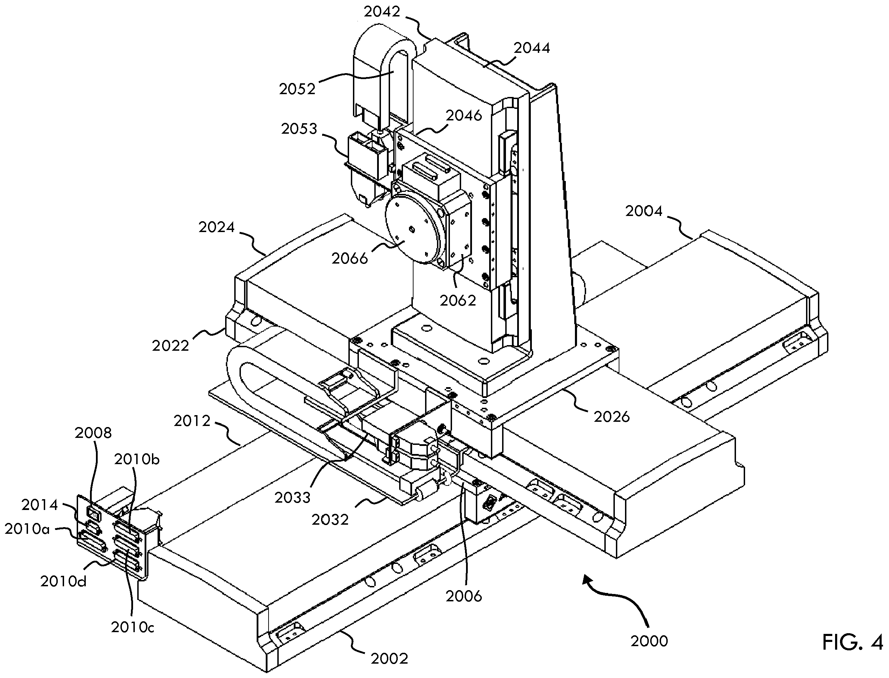

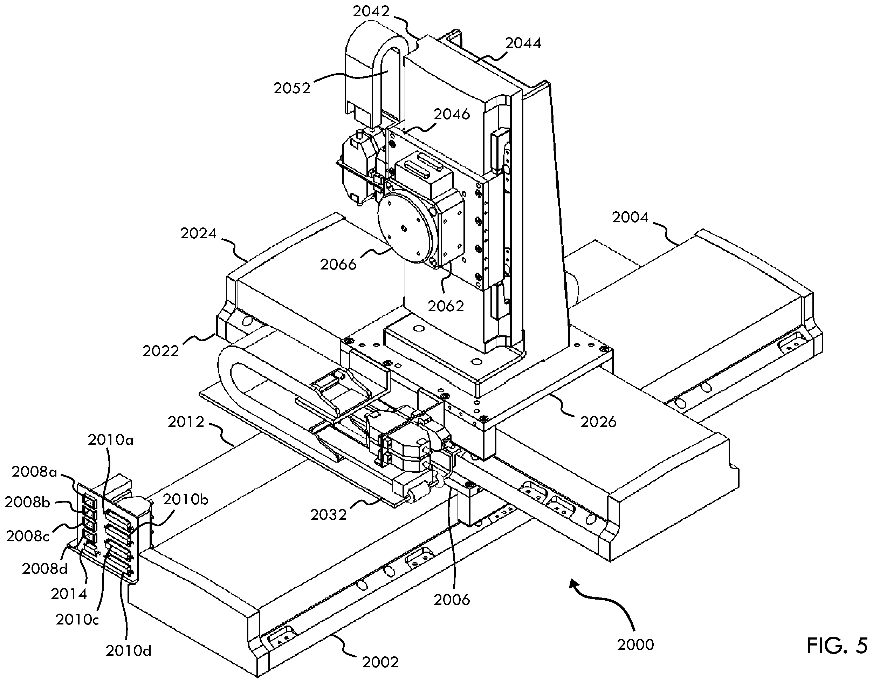

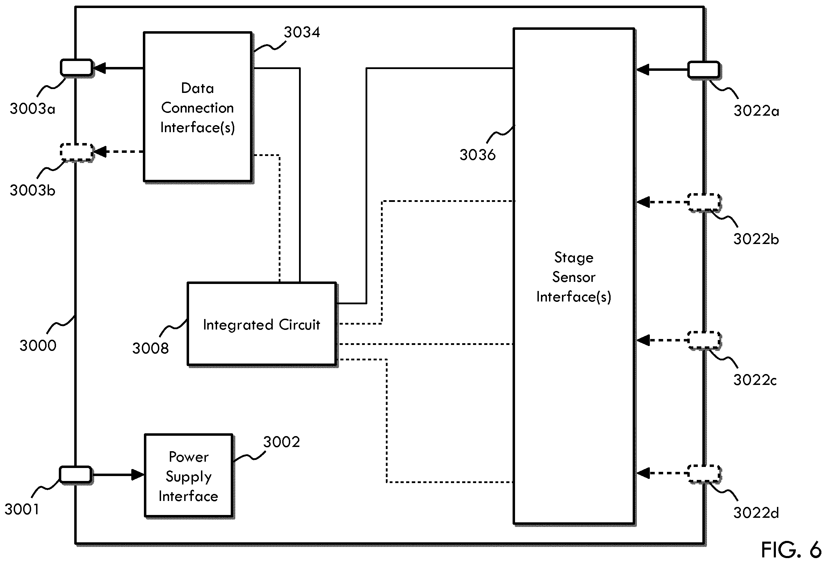

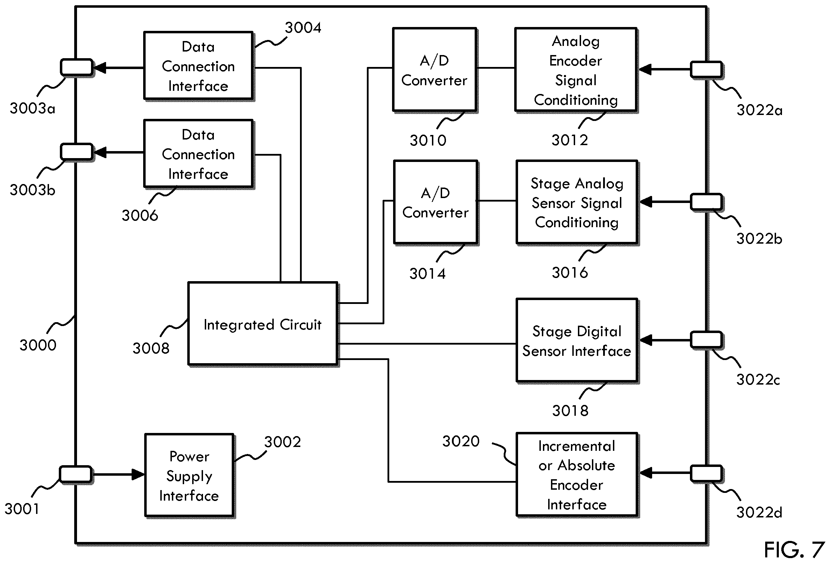

With specific reference to FIG. 3, and in one preferred and non-limiting embodiment or aspect, provided is a positioning system **2000** according to the principles of the present invention and configured for single-axis manipulation of a target object. The positioning system **2000** includes a linear translation stage **2002,** which includes a base track **2004** along which a carriage **2006** may be displaced by a motor. The motor may be any suitable drive to displace the carriage **2006** along the base track, such as, but not limited to, a brushless linear motor. The system **2000** also includes a data connector **2008,** *e.g.,* fiber optic connector, to transfer signals between serial interface boards, which are each associated with a positioning stage and a controller. A serial interface board may be positioned on, within, or next to its associated positioning stage. Data transmission cables may be used to transmit signals serially between the controller and one or more serial interface boards, thereby facilitating serial communication between the controller and one or more positioning stages. The data transmission cable may be fiber optic, but other like communication connections are sufficient. A preferred and non-limiting embodiment of said serial interface board is depicted in FIGS. 6 and 7. The system **2000** also includes a motor power connector **2010.** The system **2000** further includes a low voltage electronics connector **2014,** *e.g.,* 12 volt / 24 volt, to provide power to the serial interface board electronics and sensors, which generate signals including thermistor signals, hall signals, limit signals, encoder signals, and/or the like. The system **2000** includes a cable tray **2012** to facilitate cable management from the connectors to one or more stages, such as the linear translation stage **2002.** It will be appreciated that the positioning stage **2002** as depicted in FIG. 3 can be combined with one or more other positioning stages to achieve additional axes of movement, such as in the system **2000** depicted in FIGS. 4 and 5. The linear translation stage **2002** may also instead be a lone rotation stage, or other type of positioning stage. The use of one or more serial interface boards with one or more positioning stages reduces the drawbacks and number of physical cables in the positioning system without compromising the connectivity between one or more controllers and the positioning stages. It will be appreciated that numerous configurations and combinations of positioning stages are possible.

With specific reference to FIG. 4, and in one preferred and non-limiting embodiment or aspect, provided is a positioning system **2000** according to the principles of the present invention and configured for multi-axis manipulation of a target object. The positioning system **2000** includes a first positioning stage **2002,** a second positioning stage **2022,** a third positioning stage **2042,** and a fourth positioning stage **2062.** Each linear translation stage **2002, 2022, 2042** includes a base track **2004, 2024, 2044** along which a carriage **2006, 2026, 2046** may be displaced by a motor, such as, but not limited to, a brushless linear motor. In this non-limiting example, the fourth positioning stage **2062** has a carriage **2066** that ultimately may be connected to the target object for manipulation, and which is driven by a motor, such as, but not limited to, a brushless rotary motor. The system **2000** also includes a data connector **2008,** *e.g.,* a fiber optic connector, to transfer signals between serial interface boards, which are each associated with a positioning stage and a controller. Each serial interface board may be positioned on, within, or next to its associated positioning stage. Data transmission cables may be used to transmit signals between the controller and one or more serial interface boards, thereby facilitating communication between the controller and one or more positioning stages **2002, 2022, 2042, 2062.** Serial interface boards may be each independently connected to a controller, or the boards may communicate with a controller by being connected to each other in a chain. Many combinations of chained and branched communication links are possible, such that some serial interface boards are directly connected to a controller, while others communicate with a controller through chained board connections. It will be appreciated that many configurations are possible. The data transmission cables may be fiber optic, but other like communication connections are sufficient. A preferred and non-limiting embodiment of said serial interface board is depicted in FIG. 6. The system **2000** also includes a number of motor power connectors **2010** for connecting the system **2000** to a power source, which supplies power to each of the positioning stage motors. The system **2000** further includes a low voltage electronics connector **2014,** *e.g.,* 12 volt / 24 volt, to provide power to the serial interface board electronics and sensors, which generate signals including thermistor signals, hall signals, limit signals, encoder signals, and/or the like. The system **2000** includes a series of cable trays **2012, 2032, 2052** to facilitate cable management from the connectors to one or more positioning stages **2002, 2022, 2042, 2062.** Because only one set of serially connected cables are required for communication between the controller and each of the positioning stages **2002, 2022, 2042, 2062,** multiple additional cables, cable connectors, and trays associated with the prior art are unnecessary.

With specific reference to FIG. 5, and in one preferred and non-limiting embodiment or aspect, provided is a positioning system **2000** according to the principles of the present invention and configured for multi-axis manipulation of a target object. The positioning system **2000** includes a first positioning stage **2002,** a second positioning stage **2022,** a third positioning stage **2042,** and a fourth positioning stage **2062.** Each linear translation stage **2002, 2022, 2042** includes a base track **2004, 2024, 2044** along which a carriage **2006, 2026, 2046** may be displaced by a motor (internal as depicted), such as, but not limited to, a brushless linear motor. The fourth positioning stage **2062** has a carriage **2066** which ultimately may be connected to the target object for manipulation, driven by a motor, such as, but not limited to, a brushless rotary motor. The system **2000** also includes a number of data connectors **2008,** *e.g.,* fiber optic data connectors, to transfer signals between serial interface boards, which are each associated with a positioning stage, and a controller. Each serial interface board may be positioned on, within, or next to its associated positioning stage. Data transmission cables may be used to transmit signals between the controller and one or more serial interface boards, thereby facilitating communication between the controller and one or more positioning stages **2002, 2022, 2042, 2062.** Serial interface boards may be each independently connected to a controller, or the boards may communicate with a controller by being connected to each other in a chain. Many combinations of chained and branched communication links are possible, such that some serial interface boards are directly connected to a controller, while others communicate with a controller through chained board connections. It will be appreciated that many configurations are possible. The data transmission cables may be fiber optic, but other like communicative connections are sufficient. Preferred and non-limiting embodiments of a serial interface board are depicted in FIGS. 6 and 7. The system **2000** also includes a number of motor power connectors **2010** for connecting the system **2000** to a power source, which supplies power to each of the positioning stage motors. The system **2000** further includes a low voltage electronics connector **2014,** *e.g.,* 12 volt / 24 volt, to provide power to the serial interface board electronics and sensors, which generate signals including thermistor signals, hall signals, limit signals, encoder signals, and/or the like. The system **2000** includes a series of cable trays **2012, 2032, 2052** to facilitate cable management from the connectors to one or more positioning stages **2002, 2022, 2042, 2062.** Because each positioning stage's sensor connections are consolidated in each stage's serial interface board, only one set of cables are required for communication between the controller and each of the positioning stages **2002, 2022, 2042, 2062.** The additional cables, cable connectors, and trays associated with the prior art are unnecessary.

With specific reference to FIG. 6, and in one preferred and non-limiting embodiment or aspect, provided is a simplified serial interface board **3000** for use in, on, or with a positioning stage in a positioning system. The serial interface board **3000** may have a power supply interface **3002** that is connected to a power supply connection **3001,** such as a power cable. The serial interface board **3000** may include one or more data connection interfaces **3034,** *e.g.,* SFP fiber optic connectors, for serial communicative connection between the controller and subsequent serial interface boards. The one or more data connection interfaces **3034** are configured to be in communication with one or more data connections **3003.** A data connection interface **3034** may be configured to connect to the controller or a serial interface board closer to the controller in the serial chain, and another or same data connection interface **3034** may be configured to connect to a serial interface board farther away from the controller in the serial chain. The serial interface board **3000** may include one or more stage sensor interfaces **3036,** which may include analog-to-digital converters, encoders, sensor connectors, and/or the like, for receiving stage sensor signals from sensors associated with the positioning stage. The one or more stage sensor interfaces **3036** are configured to be in communication with one or more stage sensor connectors **3022.** Stage sensors may be analog or digital. The serial interface board **3000** may include an integrated circuit **3008** (*e.g.,* a field-programmable gate array, a DSP integrated circuit, a microprocessor, and/or the like) for sending and receiving signals from the controller, other serial interface boards, stage sensors interfaces, and/or the like. It will be appreciated that the serial interface board **3000** may include additional or duplicative components, in the same, substantially the same, or different configurations, within the spirit of the present invention. It will also be appreciated that the power supply may be serially connected from one serial interface board **3000** to another through connection from one power interface to another. Many configurations are possible.

With specific reference to FIG. 7, and in one preferred and non-limiting embodiment or aspect, provided is a serial interface board **3000** for use in, on, or with a positioning stage in a positioning system. The serial interface board **3000,** if requiring external power to operate, may have a power supply interface **3002** that is connected to a power supply connection **3001,** such as a power cable. The serial interface board **3000** may include one or more data connection interfaces **3004, 3006,** *e.g.,* SFP fiber optic connectors, for serial communicative connection between the controller and subsequent serial interface boards. The data connection interfaces **3004, 3006** are configured to be in communication with one or more data connections **3003a-b.** One data connection interface **3004,** *e.g.,* a fiber optic connector, may be configured to connect to the controller or a serial interface board closer to the controller in the serial chain, and another data connection interface **3006,** *e.g.,* a fiber optic connector, may be configured to connect to a serial interface board farther away from the controller in the serial chain. The serial interface board **3000** may include an integrated circuit **3008** (*e.g.,* a field-programmable gate array, a DSP integrated circuit, a microprocessor, and/or the like) for sending and receiving signals from the controller, other serial interface boards, stage sensors, stage encoders, and/or the like. The serial interface board **3000** may include at least one analog-to-digital converter **3010** for converting conditioned analog encoder signals **3012** from analog encoders. The serial interface board **3000** may also include at least one analog-to-digital converter **3014** for converting conditioned analog sensor signals **3016** from stage analog sensors. The digital signals converted by analog-to-digital converters **3010, 3014** may be communicated to the integrated circuit **3008** for communication to the controller via a data connection interface **3004.** The integrated circuit **3008** may also receive digital signals from a stage digital sensor interface **3018,** which is connected to digital stage sensors of the associated stage. Stage sensor signals are received by the various stage sensor interfaces via communicative connections to stage sensor connectors **3022a-d.** The integrated circuit **3008** may also receive digital signals from an incremental or absolute encoder interface **3020,** which is connected to an incremental or absolute encoder of the associated stage. It will be appreciated that the serial interface board **3000** may include additional or duplicative components, in the same, substantially the same, or different configurations, within the spirit of the present invention. It will also be appreciated that the power supply may be serially connected from one serial interface board **3000** to another through connection from one power interface to another. Many configurations are possible.

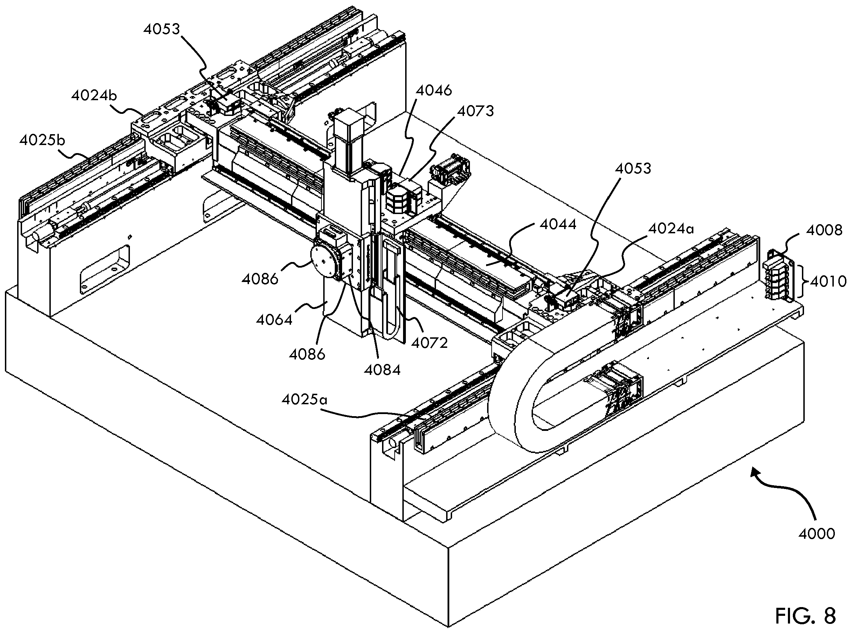

With specific reference to FIG. 8, and in one preferred and non-limiting embodiment or aspect, provided is a positioning system **4000** according to the principles of the present invention and configured for multi-axis manipulation of a target object. This exemplary positioning system **4000** is also known as a gantry positioning system. It will be appreciated that this positioning system and the preceding depicted positioning systems are just some examples of many other combinations and configurations within the spirit of the invention. The system **4000** includes a first positioning stage **4024a-b,** a second positioning stage **4044,** a third positioning stage **4064,** and a fourth positioning stage **4084.** The first positioning stage **4024a-b** includes at least one drive for displacing a set of two track mounts linearly along two tracks **4025a-b.** Mounted between the tracks **4025a-b** of the first positioning stage **4024a-b** is the track of the second positioning stage **4044,** such that movement of the track mounts on tracks **4025a-b** linearly displaces the second positioning stage **4044.** The second positioning stage **4044** is a linear positioning stage having a carriage **4046** upon which is carried the third positioning stage **4064.** The third positioning stage **4064** is a linear positioning stage having a carriage **4066** upon which is carried the fourth positioning stage **4084.** The fourth positioning stage **4084** is a rotational positioning stage **4086** upon which an object to manipulated may be mounted. In this configuration, the object to be manipulated can be displaced along three linear axes (*i.e.,* x-axis, y-axis, z-axis) and rotated about one rotational axis (*i.e.,* the x-axis of the first positioning stage). It will be appreciated that any number of additional stages, having varying types of movement, can be employed and/or combined within the scope of the present inventions, and many other configurations are possible.

With further reference to FIG. 8, and in further preferred and non-limiting embodiments, the system **4000** also includes at least one data connector **4008,** *e.g.,* a fiber optic data connector, to transfer signals between serial interface boards, which are each associated with a positioning stage and a controller. Each serial interface board may be positioned on, within, or next to its associated positioning stage. Data transmission cables may be used to transmit signals between the controller and one or more serial interface boards, thereby facilitating communication between the controller and one or more positioning stages **4024, 4044, 4064, 4084.** Serial interface boards may be each independently connected to a controller, or the boards may communicate with a controller by being connected to each other in a chain. Many combinations of chained and branched communication links are possible, such that some serial interface boards are directly connected to a controller, while others communicate with a controller through chained board connections. It will be appreciated that many configurations are possible. The data transmission cables may be fiber optic, but other like communicative connections are sufficient. Preferred and non-limiting embodiments of a serial interface board are depicted in FIGS. 6 and 7. The system **4000** also includes a number of motor power connectors **4010** for connecting the system **4000** to a power source, which supplies power to each of the positioning stage motors. Because each positioning stage's sensor connections are consolidated in each stage's serial interface board, only one set of cables are required for communication between the controller and each of the positioning stages **4024, 4044, 4064, 4084.** The additional cables, cable connectors, and trays associated with the prior art are unnecessary.

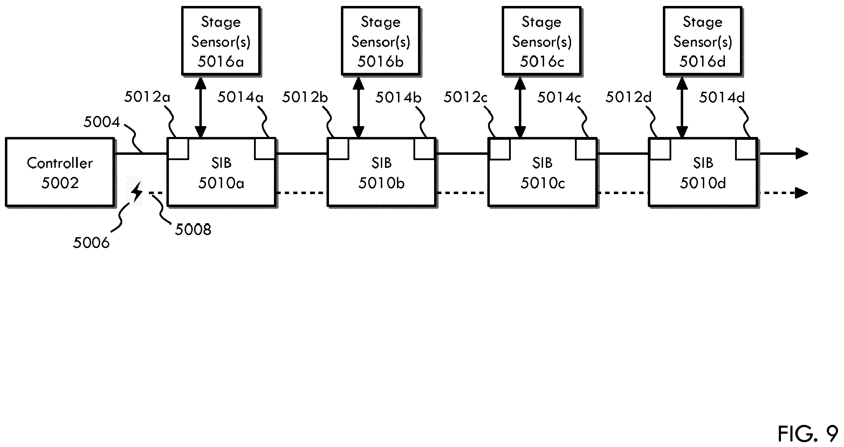

With specific reference to FIG. 9, and in one preferred and non-limiting embodiment or aspect, provided is a schematic diagram depicting an example connection configuration between at least one controller **5002** and one or more serial interface boards (SIB) **5010a-d.** As shown, at least one controller **5002** may have a data connection **5004** to a first SIB **5010a** associated with a first positioning stage. The data connection **5004** is in communication with a first data connection output interface **5012a** of the first SIB **5010a.** The first SIB **5010a** receives power from a power source **5006** via a power connection **5008.** The SIB **5010a** is configured to receive sensor signals from one or more sensors **5016a** of the associated first positioning stage. The sensors **5016** of each positioning stage in the system may include, but are not limited to, a hall sensor, a limit sensor, an accelerometer, an inclinometer, a geophone, an analog encoder, a digital encoder, or any combination thereof. Sensors may be analog or digital. The sensor signals may include, but are not limited to, a motor temperature, an acceleration force, a stage material temperature, a stage position, or any combination thereof. In the depicted example, the first data connection input interface **5014a** of the first SIB **5010a** is communicatively connected to the second data connection output interface **5012b** of the second SIB **5010b.** Like the first SIB **5010a,** the second SIB **5010b** is configured to receive sensor signals from sensors **5016b** of the associated positioning stage. According to this configuration, the sensor signals from the second positioning stage may be relayed to the controller **5002** from the second SIB **5010b** via the first SIB **5010a.** It will be appreciated that this serial arrangement may be used for any number of additional SIB **5010.** The data connection output interface **5012** of each additional SIB **5010** is connected to the data connection input interface **5014** of the preceding SIB **5010.** In this manner, the number of data connections from the controller **5002** to each stage sensor **5016** is reduced, given that sensor signals are receive at each SIB **5010** and relayed to the controller through the centralized data connections. The power connection **5008** may be connected separately to each SIB **5010** or may be connected serially from one SIB to another. It will be appreciated that many other configurations are possible.

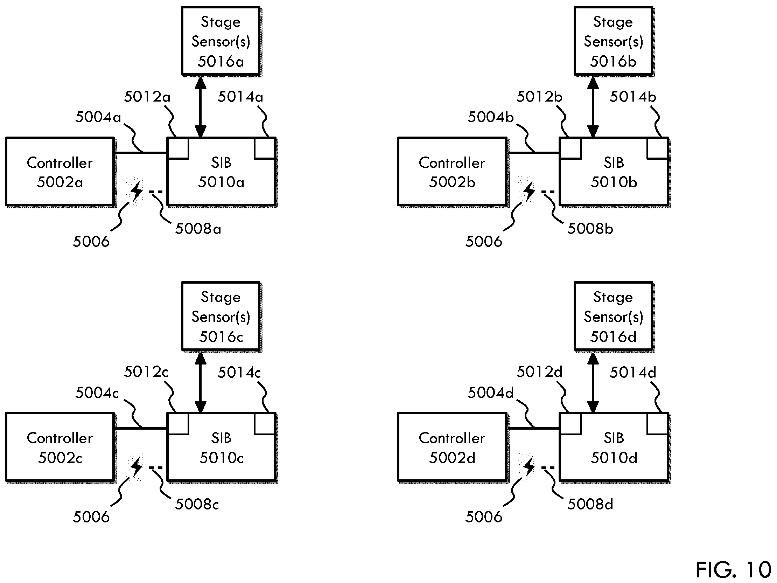

With specific reference to FIG. 10, and in one preferred and non-limiting embodiment or aspect, provided is a schematic diagram depicting an example connection configuration between one or more controllers **5002a-d** and one or more serial interface boards (SIB) **5010a-d.** As shown, a first controller **5002a** may have a data connection **5004a** to a first SIB **5010a** associated with a first positioning stage. The data connection **5004a** is in communication with a first data connection output interface **5012a** of the first SIB **5010a.** The first SIB **5010a** receives power from a power source **5006** via a power connection **5008a.** The SIB **5010a** is configured to receive sensor signals from one or more sensors **5016a** of the associated first positioning stage. The sensors **5016** of each positioning stage in the system may include, but are not limited to, a hall sensor, a limit sensor, an accelerometer, an inclinometer, a geophone, an analog encoder, a digital encoder, or any combination thereof. The sensor signals may include, but are not limited to, a motor temperature, an acceleration force, a stage material temperature, a stage position, or any combination thereof. In the depicted example, any connection input interface **5014** may not be necessary if no further SIB **5010** is connected in sequence with the given SIB **5010.** However, each connection input interface may **5014** may be used to connect additional SIB **5010,** as shown in FIG. 9. As for the configuration in FIG. 10, for each SIB **5010,** an independent or same controller **5002** may have a data connection **5004** to the additional SIB **5010** associated with a positioning stage. The data connection **5004** is in communication with a first data connection output interface **5012** of the SIB **5010.** The SIB **5010** receives power from a power source **5006** via a power connection **5008.** The power source **5006** for a given SIB **5010** may be the same or independent from another SIB **5010** and may be directly or indirectly connected to each SIB **5010.** Each SIB **5010** is configured to receive sensor signals from one or more sensors **5016** of its associated positioning stage. In this configuration, the number of sensor **5016** signal connections are also reduced, because independent connections from each sensor **5016** are not required due to consolidation at each SIB **5010.** It will be appreciated that many other configurations are possible.

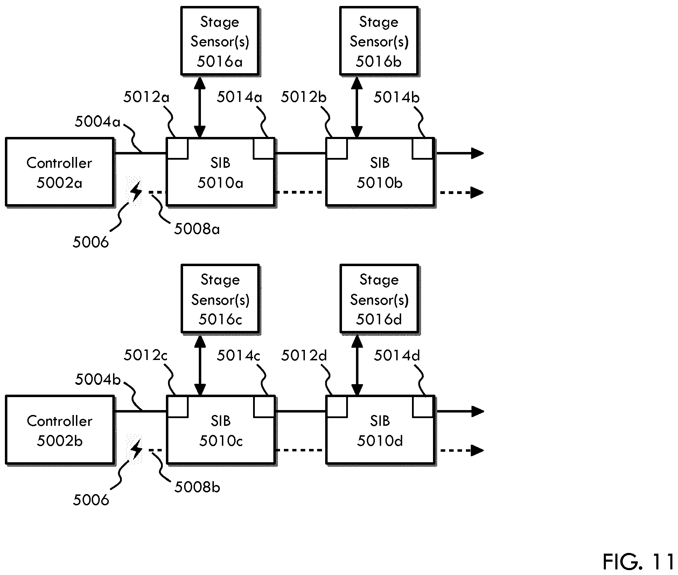

With specific reference to FIG. 11, and in one preferred and non-limiting embodiment or aspect, provided is a schematic diagram depicting an example connection configuration between one or more controllers **5002a-b** and one or more serial interface boards (SIB) **5010a-d.** As shown, a first controller **5002a** may have a data connection **5004a** to a first SIB **5010a** associated with a first positioning stage. The data connection **5004a** is in communication with a first data connection output interface **5012a** of the first SIB **5010a.** The first SIB **5010a** receives power from a power source **5006** via a power connection **5008a.** The SIB **5010a** is configured to receive sensor signals from one or more sensors **5016a** of the associated first positioning stage. The sensors **5016** of each positioning stage in the system may include, but are not limited to, a hall sensor, a limit sensor, an accelerometer, an inclinometer, a geophone, an analog encoder, a digital encoder, or any combination thereof. The sensor signals may include, but are not limited to, a motor temperature, an acceleration force, a stage material temperature, a stage position, or any combination thereof. In the depicted example, any connection input interface **5014** may not be necessary if no further SIB **5010** is connected in sequence with the given SIB **5010.** However, each connection input interface may **5014** may be used to connect additional SIB **5010** via the data connection output interface **5012** of the additional SIB **5010.** As shown, a second SIB **5010b** is connected to a first SIB **5010a,** which is connected to a controller **5002a.** Also, a fourth SIB **5010d** is connected to a third SIB **5010c,** which is connected to a controller **5002b.** The separate controllers **5002a-b** may also be one controller. It will be appreciated that additional SIB **5010** may be added serially or in parallel to the sequence of nodes of SIB **5010,** having a connection to a preceding SIB **5010** or a connection to a controller **5002.** The power source **5006** for a given SIB **5010** may be the same or independent from another SIB **5010** and may be directly or indirectly connected to each SIB **5010.** It will be appreciated that many other configurations are possible.

With continued reference to the foregoing figures, and in one preferred and non-limiting embodiment or aspect, the digital communication between serial interface boards and the controller may be packetized, as digital signals sent between the controller and each node, *i.e.,* each serial interface board associated with a positioning stage and having an integrated circuit. Packet transfers may occur at a rate of 100 ns per axis. For a single axis system, the data packet update rate may be 10 MHz. For a four-axis system, the data packet update rate may be 2.5 MHz. It will be appreciated that other rates and configurations are possible. The digital communications packet may also be divided into one or more subparts, *e.g*., a high speed component and a low speed component. The high speed component of the digital communications packet may contain position feedback and an auxiliary channel that may be used for high-bandwidth sensor data, *e.g*., accelerometer data. A preferred but non-limiting example of a nominal packet frequency of auxiliary channel may be 10 MHz per axis. The low speed component of the digital communications packet may contain sensor data that is not time critical. It may be transferred in eight-bit quantities, *e.g*., time division multiplexed data ("TDM DATA"), and reconstructed at the controller at a nominally slower rate, *e.g.,* 200 kHz. The serial interface-to-controller packet header ("HDR") may contain an index representing the datatype of the TDM DATA packet.

With continued reference to the foregoing figures, and with further reference to the preceding preferred and non-limiting embodiment or aspect, in addition to an HDR, the digital communications packet may be divided into a number of subparts to facilitate the high speed component and the low speed component. As an initial matter, the HDR may include an eight-bit data structure, including a start bit, and information of the packet type and address forming the remaining seven bits. The communications packet may include raw analog-to-digital converted signal values, *e.g*., stage encoder sine and cosine values in sixteen-bit data structures each. The communications packet may include a high-speed component, such as auxiliary sensor data, *e.g.,* accelerometer data, in a sixteen-bit data structure. As described above, the communications packet may also include a low-speed component, *e.g*., TDM DATA. The TDM DATA may be further subdivided into hall sensor signals, limit signals, motor temperature, material temperature, and sensor data such as from accelerometers, inclinometers, geophones, encoders, and/or the like (in a five-bit data structure), motor temperature flag (in a one-bit data structure), encoder status flag (in a one-bit data structure), and a spare data bit. The TDM DATA may also include temperature analog-to-digital converted data, and various sensor data, such as accelerometers, inclinometers, geophones, etc. Finally, the communications data packet may also include a cyclic redundancy check subpart, for error detection, in an eight-bit data structure. It will be appreciated that this configuration of the communications data packet is just one preferred and non-limiting example and may be configured in a number of alternative arrangements.

Although the invention has been described in detail for the purpose of illustration based on what is currently considered to be the most practical and preferred and non-limiting embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

## Claims

1. A positioning system having at least one axis of movement comprising:
at least one controller configured to communicate stage-positioning control signals;
at least one positioning stage in communication with the at least one controller and comprising a first positioning stage, the first positioning stage configured to receive the stage-positioning control signals from the at least one controller and comprising:
a first carriage;
a first motor configured to displace the first carriage along a first positioning axis or rotate the first carriage about the first positioning axis; and
a first serial interface comprising an integrated circuit, at least one stage sensor connection, and a first data connection, the first serial interface being configured to:
connect to a source of power;
receive first-stage sensor signals from one or more stage sensors associated with the first positioning stage; and
communicate at least a portion of the first-stage sensor signals to the at least one controller via the first data connection.

2. The positioning system of claim 1, wherein the at least one positioning stage further comprises a second positioning stage carried at least partly by the first carriage, the second positioning stage comprising:
a second carriage;
a second motor configured to displace the second carriage along a second positioning axis or rotate the second carriage about the second positioning axis; and
a second serial interface comprising an integrated circuit, at least one stage sensor connection, and a second data connection, the second serial interface being configured to:
connect to a source of power;
receive second-stage sensor signals from one or more stage sensors associated with the second positioning stage; and
communicate at least a portion of the second-stage sensor signals to the at least one controller via the second data connection.

3. The positioning system of claim 1 or claim 2, wherein the at least one positioning stage further comprises a third positioning stage carried at least partly by the second carriage, the third positioning stage comprising:
a third carriage;
a third motor configured to displace the third carriage along a third positioning axis or rotate the third carriage about the third positioning axis; and
a third serial interface comprising an integrated circuit, at least one stage sensor connection, and a third data connection, the third serial interface being configured to:
connect to a source of power;
receive third-stage sensor signals from one or more stage sensors associated with the third positioning stage; and
communicate at least a portion of the third-stage sensor signals to the at least one controller via the third data connection.

4. The positioning system of any one of claims 1 to 3, wherein the at least one positioning stage further comprises a fourth positioning stage carried at least partly by the third carriage, the fourth positioning stage comprising:
a fourth carriage;
a fourth motor configured to displace the fourth carriage along a fourth positioning axis or rotate the fourth carriage about the fourth positioning axis; and
a fourth serial interface comprising an integrated circuit, at least one stage sensor connection, and a fourth data connection, the fourth serial interface being configured to:
connect to a source of power;
receive fourth-stage sensor signals from one or more stage sensors associated with the fourth positioning stage; and
communicate at least a portion of the fourth-stage sensor signals to the at least one controller via the fourth data connection.

5. The positioning system of any one of claims 1 to 4, wherein the first-stage sensor signals, the second-stage sensor signals, the third-stage sensor signals, and the fourth-stage sensor signals each comprise at least one of the following signals: a motor temperature; an acceleration force; a stage material temperature; a stage position; or any combination thereof.

6. The positioning system of any one of claims 1 to 5, wherein the one or more stage sensors of the first positioning stage, the second positioning stage, the third positioning stage, or the fourth positioning stage comprise at least one of the following: a hall sensor; a limit sensor; an accelerometer; an inclinometer; a geophone; an analog encoder; a digital encoder; or any combination thereof.

7. The positioning system of any one of claims 1 to 6, wherein:
the second data connection of the second serial interface is communicatively connected to the first serial interface, such that the second-stage sensor signals are communicated to the at least one controller via the first serial interface; and/or, the third data connection of the third serial interface is communicatively connected to the second serial interface or the first serial interface, such that the third-stage sensor signals are communicated to the at least one controller via the second serial interface and/or the first serial interface; and/or,
the fourth data connection of the fourth serial interface is communicatively connected to one of the third serial interface, the second serial interface, and the first serial interface, such that the fourth-stage sensor signals are communicated to the at least one controller via at least one of the third serial interface, the second serial interface, and the first serial interface.

8. The positioning system of any one of claims 1 to 7, wherein for each serial interface of the first serial interface, the second serial interface, the third serial interface, and the fourth serial interface, the integrated circuit comprises a field programmable gate array.

9. A serial interface board for use in or on one or more positioning stages of a positioning system controlled by at least one controller, the serial interface board comprising:
a connection to a source of power;
at least one data connection interface configured to be communicatively connected with other serial interface boards or the at least one controller;
at least one stage sensor connection interface configured to receive stage sensor signals from one or more positioning stage sensors; and
an integrated circuit communicatively connected to the at least one data connection interface and the at least one stage sensor connection interface, the integrated circuit programmed or configured to:
receive stage sensor signals from the one or more positioning stage sensors; and
communicate the stage sensor signals to the at least one controller.

10. The serial interface board of claim 9, wherein the integrated circuit is further programmed or configured to relay stage sensor signals between at least one other serial interface board and the at least one controller, wherein a first data connection interface of the at least one data connection interface is configured to communicatively connect to the at least one other serial interface board.

11. The serial interface board of any one of claims 9 or 10:
further comprising at least one analog-to-digital converter configured to encode analog stage sensor signals as digital stage sensor signals; and/or,
wherein the integrated circuit is further programmed or configured to relay signals between a first other serial interface board and a second other serial interface board, and wherein a first data connection interface of the at least one data connection interface is configured to communicatively connect to the first other serial interface board and a second data connection interface of the at least one data connection interface is configured to communicatively connect to the second other serial interface board; and/or,
wherein the stage sensor signals comprise at least one of the following: a motor temperature; an acceleration force; a stage material temperature; a stage position; or any combination thereof.

12. A method of operating a positioning system having at least one axis of movement and comprising at least one controller configured to send control signals and receive sensor signals, and at least one positioning stage in communication with the at least one controller and comprising a first positioning stage having a first serial interface, the method comprising the steps of:
connecting the first serial interface to a source of power;
relaying stage sensor signals from one or more positioning stage sensors associated with the at least one positioning stage to the at least one controller; and
communicating at least a portion of the stage sensor signals to the at least one controller.

13. The method of claim 12, wherein the at least one positioning stage further comprises a second positioning stage having a second serial interface and being at least partly carried by the first positioning stage, the method further comprising the steps of:
communicatively connecting the second serial interface to the first serial interface; and
relaying at least a portion of stage sensor signals from the second positioning stage to the at least one controller via the first serial interface.

14. The method of any one of claims 12 or 13, wherein:
the at least one positioning stage further comprises a third positioning stage having a third serial interface and being at least partly carried by the second positioning stage, the method further comprising the steps of:
communicatively connecting the third serial interface to the second serial interface or the first serial interface; and
relaying at least a portion of stage sensor signals from the third positioning stage to the at least one controller via the second serial interface and/or the first serial interface; and/or, the at least one positioning stage further comprises a fourth positioning stage having a fourth serial interface and being at least partly carried by the third positioning stage, the method further comprising the steps of:
communicatively connecting the fourth serial interface to one of the third serial interface, the second serial interface, and the first serial interface; and
relaying at least a portion of stage sensor signals from the fourth positioning stage to the at least one controller via at least one of the third serial interface, the second serial interface, and the first serial interface.

15. The method of any one of claims 12 to 14, wherein the first serial interface comprises an integrated circuit, the method further comprising converting analog stage sensor signals to digital sensor signals and communicating the digital sensor signals to the at least one controller.
